# EUROPEAN PATENT APPLICATION

(11) **EP 4 764 467 A1**
(43) Date of publication of application: **24.06.2026**
(21) Application number: 24222819.5
(22) Date of filing: 23.12.2024
(51) Int. Cl.: G01N 21/89, G01N 21/892, E01C 13/08, G06T 7/00, G01N 21/84, G01N 21/88

(54) **OPTICAL DETECTION OF MANUFACUTRING DEFECTS IN ARTIFICIAL TURF**

(71) Applicant: Polytex Sportbeläge Produktions-GmbH, 47929 Grefrath (DE)
(72) Inventor: HAMANN, Sven, 45472 Mühlheim (DE); ONDRUS, Robert, 89075 Ulm (DE); SICK, Stephan, 76534 Baden-Baden (DE); GROCHLA, Dario, 44869 Bochum (DE); VAN DEN BERG, Thorsten, 45145 Essen (DE)
(74) Representative: Richardt Patentanwälte PartG mbB

(57) **Abstract**

Disclosed is a method of manufacturing an artificial turf (126, 108). The method comprises providing a strip of artificial turf (108) by attaching artificial turf fibers (120) to a substrate (110). The method further comprises acquiring optical data (162) descriptive of a surface (126) of the artificial turf using an optical sensor system (104). The method further comprises receiving a turf quality metric (166) in response to inputting the optical data into a computer vision module (164). The turf quality metric is descriptive of the presence of at least one of a predetermined list of manufacturing defects (700, 800, 900, 1000, 1100, 1200). The method further comprises labeling the strip of artificial turf (108) with the turf quality metric.

## Description

### FIELD OF THE INVENTION

The invention relates to artificial turf and the production of artificial turf.

### BACKGROUND

Artificial turf is a manufactured product which is used to replace grass. The structure of the artificial turf is designed such that the artificial turf has an appearance which resembles grass. Typically, artificial turf is used as a surface for sports such as soccer, American football, rugby, tennis, golf, for playing fields, or exercise fields. Furthermore, artificial turf is frequently used for landscaping applications.

### SUMMARY OF THE INVENTION

The invention provides for a method of manufacturing artificial turf, a computer program, and a manufacturing system for artificial turf in the independent claims. Embodiments are given in the dependent claims.

In one aspect a method of manufacturing artificial turf is disclosed. The method comprises providing a strip of artificial turf by attaching artificial turf fibers to a substrate. The method further comprises acquiring optical data descriptive of a surface of the artificial turf using an optical sensor system. The method further comprises receiving a turf quality metric in response to inputting the optical data into a computer vision module. The turf quality metric is descriptive of the presence of at least one of a predetermined list of manufacturing defects. The method further comprises labeling the strip of artificial turf with the turf quality metric.

In another aspect, a computer program comprising a computer-readable storage medium having machine-executable instructions embodied therewith is disclosed. The machine-executable instructions are configured to cause a computational system to acquire optical data descriptive of the surface of a strip of artificial turf using an optical sensor system. The machine-executable instructions are further configured to cause the computational system to receive a turf quality metric in response to inputting the optical data into a computer vision module. The turf quality metric is descriptive of the presence of at least one of a predetermined list of manufacturing defects. The machine-executable instructions are further configured to cause the computational system to label the strip of artificial turf with the turf quality metric.

In another aspect, a manufacturing system for artificial turf is disclosed. The manufacturing system comprises an optical sensor configured for acquiring optical data. The manufacturing system further comprises a memory storing (for example on premises or cloud based) machine-executable instructions and a computer vision module. The manufacturing system further comprises a computational system. Execution of the machine-executable instructions causes the computational system to control the manufacturing system to provide a strip of artificial turf by attaching artificial turf fibers to a substrate. Execution of the machine-executable instructions further causes the computational system to acquire optical data descriptive of a surface of the strip of artificial turf using an optical sensor system. Execution of the machine-executable instructions further causes the computational system to receive a turf quality metric in response to inputting the optical data into a computer vision module. The turf quality metric is descriptive of the presence of at least one of a predetermined list of manufacturing defects. Execution of the machine-executable instructions further causes the computational system to label the strip of artificial turf with the turf quality metric. In some examples, this label may further defines exact presence, type, intensity and location in terms of linear meter and position relative to the center of at least one of a predetermined list of manufacturing defects.

In another aspect, a strip of artificial turf is disclosed. The artificial turf comprises a label storing a turf quality metric descriptive of the presence of at least one of a predetermined list of manufacturing defects. The strip of artificial turf is labeled with the turf quality metric as a function of position along a length of the strip of the artificial turf.

In another aspect, a method of manufacturing artificial turf is disclosed. The method comprises controlling a manufacturing system configured to provide a strip of artificial turf by attaching artificial turf fibers to a substrate. The manufacturing system is controlled using a current set of process parameters. The method further comprises acquiring optical data descriptive of a surface of the artificial turf using an optical sensor system. The method further comprises receiving a turf quality metric in response to inputting the optical data into a computer vision module. The turf quality metric is descriptive of the presence of at least one of a predetermined list of manufacturing defects. The method further comprises receiving a set of adjusted process parameters in response to inputting the current set of process parameters and the turf quality metric into a process control system. The method further comprises adjusting the current set of process parameters using the set of adjusted process parameters.

In another aspect, a computer program comprising a computer-readable storage medium having machine-executable instructions embodied therewith is disclosed. The machine-executable instructions are configured to cause a computational system to control a manufacturing system for manufacturing artificial turf. The manufacturing system is configured to provide a strip of artificial turf by attaching artificial turf fibers to a substrate. The manufacturing system is controlled using a current set of process parameters.

The machine-executable instructions are further configured to cause the computational system to receive a turf quality metric in response to inputting the optical data into a computer vision module. The turf quality metric is descriptive of the presence of at least a predetermined list of manufacturing defects. The machine-executable instructions are further configured to cause the computational system to receive a set of adjusted process parameters in response to inputting the current set of process parameters and the turf quality metric into a process control system. The machine-executable instructions are further configured to cause a computational system to adjust the current set of process parameters using the set of adjusted process parameters.

In another aspect, a manufacturing system for artificial turf is disclosed. The manufacturing system comprises an optical sensor configured for acquiring optical data. The manufacturing system further comprises a memory storing machine-executable instructions, a computer vision module, and a process control system. The manufacturing system further comprises a computational system.

Execution of the machine-executable instructions causes the computational system to control the manufacturing system to provide a strip of artificial turf by attaching artificial turf fibers to a substrate. The manufacturing system is controlled using a current set of process parameters. Execution of the machine-executable instructions further causes the computational system to receive a turf quality metric in response to inputting the optical data into a computer vision module. The turf quality metric is descriptive of the presence of at least one of a predetermined list of manufacturing defects. Execution of the machine-executable instructions further causes the computational system to receive a set of adjusted process parameters in response to inputting the current set of process parameters and the turf quality metric into a process control system. Execution of the machine-executable instructions further causes the computational system to adjust the current set of process parameters using the set of adjusted process parameters.

### BRIEF DESCRIPTION OF THE DRAWINGS

In the following, examples are described in greater detail making reference to the drawings in which:
Fig. 1 illustrates an example of a manufacturing system for artificial turf.
Fig. 2 is a block diagram which illustrates a method of using the manufacturing system of Fig. 1.
Fig. 3 illustrates a further example of a manufacturing system for artificial turf.
Fig. 4 is a block diagram which illustrates a method of using the manufacturing system of Fig. 3.
Fig. 5 illustrates an example of a cloud-based system.
Fig. 6 illustrates an example of a convolutional neural network classifier.
Fig. 7 shows a photograph which illustrates an example of a curling defect in the artificial turf.
Fig. 8 shows a photograph which illustrates an example of a color stripe defect.
Fig. 9 shows a sketch which illustrates an example of an imprint defect.
Fig. 10 shows a photograph which illustrates an example of a streakiness defect
Fig. 11 shows a photograph which illustrates an example of a pole dirtiness defect.
Fig. 12 shows a photograph which illustrates an example of a darning defect in the artificial turf.

### DETAILED DESCRIPTION

In the following, similar elements are denoted by the same reference numerals.

In one aspect there is a method of manufacturing artificial turf. The method comprises providing a strip of artificial turf by attaching artificial turf fibers to a substrate. A strip of artificial turf encompasses a section or area of artificial turf that has a width and a length. The width is less than the length. The artificial turf fibers may for example be attached to the substrate using thatching or tufting. In some examples there may additionally be a backing, which is applied to a backside of the substrate and is used to glue or fixedly attach the turf fibers to the substrate. The method of manufacturing, may for example, be a roll-to-roll or web-based manufacturing method. The method further comprises acquiring optical data descriptive of a surface of the artificial turf using an optical sensor system.

The surface of the artificial turf may for example be the surface with the turf fibers extending above it and which is used to replicate the appearance and usability of a natural turf. The method further comprises receiving a turf quality metric in response to inputting the optical data into a computer vision module. The turf quality metric is descriptive of the presence of at least one predetermined list of manufacturing defects. The computer vision module may for example be implemented using an artificial intelligence technique or it may be an analytical algorithm which is used to identify at least one of the predetermined list of manufacturing defects. The turf quality metric could be presented in different ways in different examples. In one example, it could be a single number which is used to represent the quality or the compliance of the artificial turf with the at least one of the predetermined list of manufacturing defects. In other examples, the turf quality metric could be a vector with each element of the vector representing a probability that each of the at least one predetermined manufacturing defects is present. The method further comprises labeling the strip of artificial turf with the turf quality metric. The labeling may take different forms in different examples.

In some instances, the labeling of the strip of artificial turf could be performed electronically either storing the turf quality metric for the strip of artificial turf remotely in a server or by storing it on a chip which is embedded or attached to the artificial turf. For example, an RFID chip may be used. This example may be beneficial because the labeling of the artificial turf with the quality metric may enable the installation of an artificial turf with a reduced amount of waste. Additionally, the use of an automated system may provide for a consistent and repeatably means of determining the turf quality and/or detecting optical defects.

In another example, providing the strip of artificial turf comprises attaching the artificial turf fibers to the substrate using a backing coating. For example, a glue or other adhesive such as latex may be applied to the backside of the substrate. The predetermined list of manufacturing defects comprises a pole dirtiness defect. The pole dirtiness defect is a visible presence of the backing coating on the artificial turf fibers on a front side of the substrate. Normally the backing is applied to a backside of the substrate and is used to adhere or hold the artificial turf fibers to the substrate. As this is on the backside away from the lengths or tufts of the artificial turf fibers, the backing on the backside of the substrate is not visible. However, some of the glue, adhesive or latex may bleed through holes in the substrate and then may contaminate the surface of the artificial turf fibers. This example may be beneficial because the detection of the pole dirtiness defect has the advantage of being able to identify a visible defect which reduces the aesthetic quality of an artificial turf.

In another example, the method of manufacturing further comprises curing the backing coating in an oven. Measurement of the optical data occurs after curing the backing coating in the oven. For example latex or other material may be applied in liquid form to the backside of the substrate after tufting. The artificial turf then goes through an oven, which cures the backside.

In another example, the predetermined list of artificial turf defects comprises a streakiness defect. The streakiness defect is an optical defect caused by an inconsistent orientation of the turf fibers fixed in place during curing of the backing coating in the oven. Normally artificial turf has a grain or a way in which the turf fibers lie together. This mirrors the appearance of natural turf. If the artificial turf fibers attached to the substrate do not have a consistent orientation or grain, then they may have a streakiness defect. Detecting the streakiness defect may be beneficial because this may be difficult for a human operator to detect consistently in a manufacturing environment.

In another example, the predetermined list of artificial turf defects comprises any one of the following: an imprinted defect caused by a pause in the manufacturing of the strip of artificial turf, a curling defect caused by an inconsistent curling of the artificial turf fibers, a darning defect caused by a mid-manufacturing repair of the strip of artificial turf carpet and a color stripe defect caused by a color variation in the artificial turf fibers. This example may be beneficial because the detection of any or all of these artificial turf defects may cause the artificial turf to be less cosmetically attractive.

In another example, the computer vision module comprises a classification module. The classification module is configured for outputting an anomaly score vector descriptive of a relative probability of defects in the predetermined list of manufacturing defects. This may for example be beneficial because the anomaly score vector gives a detailed description of the state of the artificial turf.

In another example, the computer vision module further comprises a pre-processing module. The pre-processing module is configured for receiving the optical data and passing preprocessed optical data to the classification module. The pre-processing module may for example be beneficial because the images that are put into the classification module could be preprocessed to improve things such as contrast or edge detection as well as providing for consistent contrast and/or color balance. This may be useful in making the computer vision module function more accurately and repeatedly.

In another example, the pre-processing module is configured for any one of the following: normalizing the optical data, applying an enhance local contrast (CLAHE), filter to the optical data, and combinations thereof. Both the normalization and applying the CLAHE filter may have the benefit of improving the accuracy of the computer vision module.

In another example, the classification module is a classifier neural network.

In general, classifier neural networks can be trained using labeled training data. The training data in this example would be to provide a photograph or other optical data that images or is descriptive of artificial turf and is labeled such that the turf is described as having one or more or none of the predetermined list of manufacturing defects. This data can then be used in a training algorithm such as a deep learning algorithm to train the classifier neural network.

In another example, the classifier neural network is any one of the following: a convolutional neural network-based classifier, a ResNet-based classifier, an autoencoder-based classifier, and a U-Net-based classifier. Any of these classifiers may provide for a classifier which will be able to identify the defects in the optical data.

In another example, the optical sensor is any one of the following: a camera, a line camera, an infra-red camera, an ultraviolet camera, and an RGB camera. In these examples the optical sensor may provide camera data or two-dimensional images which may be useful for feeding into the computer vision module to identify defects.

In another example, the optical data is any one of the following: color optical data, infra-red optical data, ultraviolet data, and combinations thereof. For example, there may be more than one optical sensor or the optical sensor may be configured for measuring more than one wavelength or type of light or optical data. In some instances, various defects may be more obvious viewed under different types of light or optical radiation.

In another example, the method further comprises controlling a lighting system to provide multiple wavelengths of illumination during measurement of the optical data. For example, a single sensor optical sensor may be used, and multiple images or optical data may be acquired under different types of illumination. This may for example be useful in trying to identify color changes in the surface of the artificial turf carpet and identifying more complex types of defects. For example, providing multiple wavelengths of illumination even in the optical spectrum may help to identify color changes in the artificial turf more accurately.

In another example, the labeling comprises storing the artificial turf quality metric in at least one RFID chip attached to the strip of artificial turf. Storing the turf quality metric in an RFID chip may be beneficial because then it may be machine readable but does not require access to a server or remotely stored data. For example, this may be useful in locations where there is no internet access or where communications are at a minimum.

In another example, the labeling comprises attaching at least one optically-readable label displaying the turf quality metric to the strip of artificial turf. In this example, the turf quality metric is printed on a machine-readable label and then physically attached to the strip of artificial turf. This may be useful because there may be reduced technical requirements for retrieving or providing the turf quality metric.

In another example, the labeling comprises storing the turf quality metric in a memory. For example, the memory may be located on a cloud-based server or other location. In other examples, it may be stored in a memory of a computer accompanying a crew or team of people installing artificial turf.

In another example, the method further comprises receiving an identifier of the strip of the artificial turf. The artificial turf quality metric is labeled with the identifier of the artificial turf. For example, various strips of artificial turf may be labeled with a lot or serial number. Storing the turf quality metric with this identifier allows the data to be retrieved even when the artificial turf is not physically present.

In another example, the identifier of the strip of artificial turf is received optically via a machine vision system. For example, if the strip of artificial turf has a tag on it that is machine readable, this tag can be read, even in some instances, by the same optical system that was used to store or record the optical data that is used to determine the turf quality metric.

In another example, the turf quality metric is descriptive of the entire strip of the artificial turf. In this case, for example, the quality metric may be an averaged or maximum or minimum of the turf quality metric for the particular strip of artificial turf. This may be useful in sorting the artificial turf into different grades for different uses.

In another example, the method further comprises repeatedly determining the turf quality metric along a length of the strip of artificial turf. The strip of artificial turf is labeled with the turf quality metric as a function of position along the length of the strip of artificial turf. This may be beneficial because different parts of the artificial turf may have different values for the turf quality metric. When these are known in advance this may for example help to install the artificial turf to maintain a certain quality level or to place portions of the artificial turf which are more visible to spectators to use a higher quality there.

In a further aspect, there may be a computer program which is used to implement various steps of the method which may be performed by a computational system. For example, there may be a storage medium or memory which stores machine-executable instructions. The machine-executable instructions in one example are configured to acquire optical data descriptive of a surface of a strip of artificial turf using an optical sensor. The machine-executable instructions further cause a computational system to receive a turf quality metric in response to inputting the optical data into a computer vision module. The turf quality metric is descriptive of the presence of at least one of a predetermined list of manufacturing defects. Execution of the machine-executable instructions further causes the computational system to label the strip of artificial turf with the turf quality metric. The advantages of this have been previously discussed.

In another aspect, there is a manufacturing system for artificial turf. The manufacturing system comprises an optical sensor configured for acquiring optical data. The manufacturing system further comprises a memory storing machine-executable instructions and a computer vision module. The manufacturing system further comprises a computational system. Execution of the machine-executable instructions causes the computational system to control the manufacturing system to provide a strip of artificial turf attaching artificial turf fibers to a substrate. This may for example be performed using a process control system or industrial controllers used to control the various components of machines used to make up the manufacturing system. Execution of the machine-executable instructions further causes the computational system to acquire optical data descriptive of a surface of the strip of artificial turf using the optical sensor system. Execution of the machine-executable instructions further causes the computational system to receive a turf quality metric in response to inputting the optical data into a computer vision module. The turf quality metric is descriptive of the presence of at least one of a predetermined list of manufacturing defects. Execution of the machine-executable instructions further causes the computational system to label the strip of artificial turf with the turf quality metric. For example, if the turf quality metric is stored electronically the computational system may cause the turf quality metric to be stored on an RFID chip, in a memory in a server, or in a cloud-based system. If the labeling is physical using a paper label then labeling the strip of artificial turf with a turf quality metric may comprise printing or causing this label to be manufactured.

In another aspect, there is a strip of artificial turf. The strip of artificial turf comprises a label storing a turf quality metric descriptive of the presence of at least one of a predetermined list of manufacturing defects. The strip of artificial turf is labeled with the turf quality metric as a function of position along the length of the strip of the artificial turf. The effect of labeling the turf quality metric along this length is that the quality of the artificial turf is known as function of position along the strip is known. This may for example enable the artificial turf installed in, for example, a sport or athletic field, to have a quality which meets a certain metric. This may for example reduce the waste of artificial turf.

In another example, the label is any one of the following: at least one RFID chip, at least one optically readable label displaying the turf quality metric, a memory storing the turf quality metric with an identifier of the strip of artificial turf, and combinations thereof.

In another example, the predetermined list of manufacturing defects for this strip of artificial turf is any one of the following: streakiness, imprint, relative curling, darning, color stripes, and combinations thereof.

In another aspect, there is a method of manufacturing an artificial turf. The method comprises controlling a manufacturing system that is configured to provide a strip of artificial turf by attaching artificial turf fibers to a substrate. The manufacturing system is controlled using a current set of process parameters. The process parameters may be the settings on the various components of the manufacturing system. By adjusting or manipulating the process parameters the manufacturing system is controlled during the manufacture of the artificial turf.

The method further comprises acquiring optical data that is descriptive of a surface of the artificial turf using an optical sensor system. The method further comprises receiving a turf quality metric in response to inputting the optical data into a computer vision module. The turf quality metric is descriptive of the presence of at least one of a predetermined list of manufacturing defects. The method further comprises receiving a set of adjusted process parameters in response to inputting the current set of process parameters and the turf quality metric into a process control system. The method further comprises adjusting the current set of process parameters using the set of adjusted process parameters. During this step, the current set of process parameters could be adjusted either by replacing them with the adjusted process parameters or by using the values of the adjusted process parameters to change or modify the current set of process parameters. This example may be beneficial because it may provide for an automatic means of improving the quality of the artificial turf. Because a machine vision system is used that uses the optical sensor and the computer vision module, the effect on the artificial turf will be extremely consistent from day-to-day and over longer periods of time.

In another example, the method is performed repeatedly to provide a closed loop control system. This may be beneficial because the closed loop control system can be used to control the manufacturing system automatically.

In another example, the manufacturing system is configured to attach the artificial turf fibers to the substrate using a backing coating. For example, a polyurethane or latex may be applied to the backside of the artificial turf fibers after they have been tufted and then, for example, cured in an oven. The predetermined list of manufacturing defects comprises a pole dirtiness defect. The manufacturing system comprises an oven for curing the backing coating. The measurement of the optical data occurs after curing the backing coating in the oven. The process parameters related to pole dirtiness may typically be related to the presence of holes in the substrate. Plasma treatment may be used to treat artificial turf fibers extending through the backside of the substrate and the backside of the substrate to increase adhesion. A corona type discharge is effective for doing this. Arcing during the plasma treatment can result in small holes in the backing which can lead to the pole dirtiness defect. Observing the pole dirtiness defect can be used as a sign that the process control parameters of the plasma treatment system could be adjusted.

When confronted with a pole dirtiness defect it may be difficult to adjust the manufacturing system to eliminate this defect. By using the process control system and modifying at least one or more of these parameters it may be possible to automatically correct this defect.

In another example, the manufacturing system further comprises a tufter for attaching the artificial turf fibers to a substrate by tufting. In correct configuration of the tufter or damaged tufting needles can also, in some cases lead to a pole dirtiness defect.

In another example, the predetermined list of artificial turf defects comprises a streakiness defect. The streakiness defect is an optical defect caused by an inconsistent orientation of turf fibers that are fixed in place during curing of the backing coating in the oven. The process parameters comprise tufter control parameters. This example may be advantageous because it may provide for a means of automatically eliminating the streakiness defect during the manufacture of artificial turf.

In another example, the manufacturing system further comprises an artificial turf fiber manufacturing system. The artificial turf fiber manufacturing system may be used to provide the artificial turf fiber. This may for example involve mixing various polymers or plastics in a master batch, extruding and then possibly stretching it to provide the artificial turf fibers. There are therefore a number of process parameters which can be used to control the artificial turf fiber manufacturing system and which may have a large effect on the turf quality metric. The predetermined list of artificial turf defects further comprises any one of the following: a curling defect caused by an inconsistent curling of the artificial turf fibers, and a color stripe defect caused by color variation in the artificial turf fibers. The process parameters may comprise factors which affect the artificial turf fibers. In particular process parameters which control the extrusion of the artificial turf fibers and its quenching may have a large effect on the surface appearance, roughness, and in particular the amount of curling. The inconsistent curling of artificial turf fibers can have a large effect on the apparent color and appearance of the artificial turf.

In another example, the predetermined list of artificial turf defects further comprises an imprint defect caused by a pause in the manufacture of the strip of artificial turf and a darning defect caused by repairing a section of the artificial turf during manufacture. These are additional defects which may for example be eliminated or reduced by using the system to adjust the process parameters.

The process control system is implemented using any one of the following: as a feedforward neural network, using reinforcement learning, using Gaussian process regression, using a recurrent neural network, using a long short-term memory neural network, using a statistical model, and using multiple linear regression, using decision trees, using a random forest, and combinations thereof.

In another aspect, there is a computer program comprising a computer-readable storage medium having machine-executable instructions embodied therewith. The machine-executable instructions are configured to cause the computational system to control a manufacturing system for manufacturing artificial turf. The manufacturing system is configured to provide a strip of artificial turf by attaching artificial turf fibers to a substrate. The manufacturing system is controlled using a current set of process parameters. The machine-executable instructions further cause the computational system to receive a turf quality metric in response to inputting the optical data into a computer vision module. The turf quality metric is descriptive of the presence of at least one of a predetermined list of manufacturing defects.

The machine-executable instructions are further configured to cause the computational system to receive a set of adjusted process parameters in response to inputting the current set of process parameters and the turf quality metric into a process control system. The machine-executable instructions are further configured to cause a computational system to adjust the current set of process parameters using the set of adjusted process parameters.

In a further example, there is a manufacturing system for artificial turf. The manufacturing system comprises an optical sensor configured for acquiring optical data. The manufacturing system further comprises a memory storing machine-executable instructions, a computer vision module, and a process control system. The manufacturing system further comprises a computational system. Execution of the machine-executable instructions causes the computational system to control the manufacturing system to provide a strip of artificial turf by attaching artificial turf fibers to a substrate. The manufacturing system is controlled using a current set of process parameters.

Execution of the machine-executable instructions further causes the computational system to receive a turf quality metric in response to inputting the optical data into a computer vision module. The turf quality metric is descriptive of the presence of at least one of a predetermined list of manufacturing defects. Execution of the machine-executable instructions further causes the computational system to receive a set of adjusted process parameters in response to inputting the current set of process parameters and the turf quality metric into a process control system. Execution of the machine-executable instructions further causes the computational system to adjust the current set of process parameters using the set of adjusted process parameters.

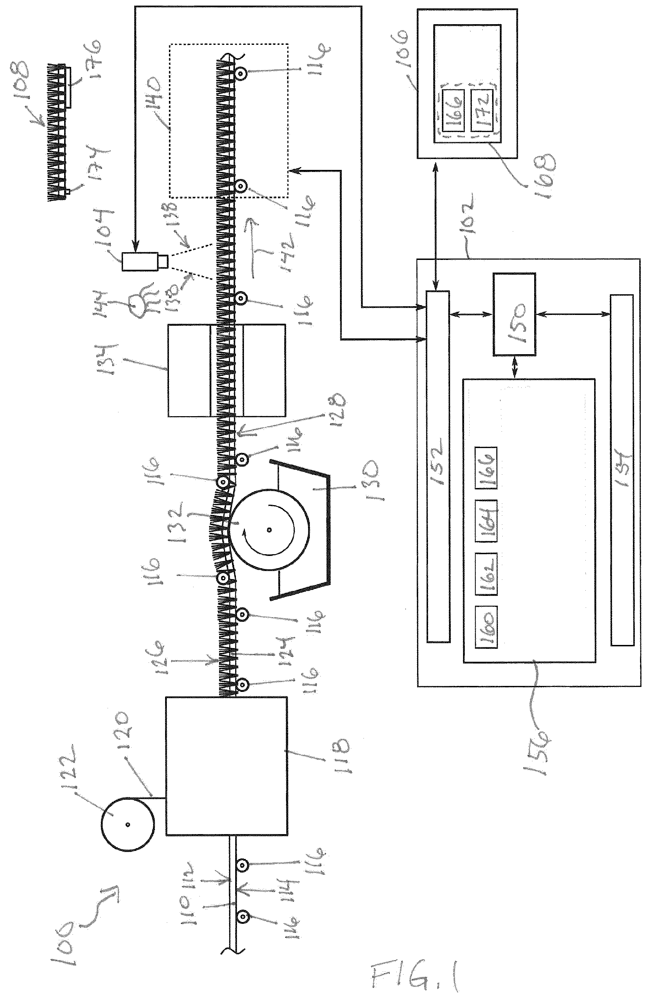

Fig. 1 illustrates an example of a manufacturing system 100 for artificial turf 108. In Fig. 1 the manufacturing system 100 is depicted along with a computer 102 that is connected to an optical sensor 104 and a remote 106 or cloud-based server. The individual components of the manufacturing system 100 in this example are optional and the remote or cloud-based server 106 is also optional.

The manufacturing system 100 is configured for receiving a substrate 110 for manufacturing artificial turf. The substrate 110 has a front side 112 and a backside 114. The manufacturing system 100 is shown as having a number of rollers 116 that are used to support the substrate 110 at various locations. The rollers 116 are intended to be illustrative and need not be in any particular location as indicated in this Figure. To start the manufacturing process, the substrate 110 is received and then fed into a tufter 118 or fiber inserter. The tufter 118 receives the substrate 110 and also artificial turf fiber 120. There may be a system for providing the artificial turf fiber 122. In some examples these may be rolls of pre-manufactured artificial turf fiber or it may be a system which has the ability to mix various polymers and plastics in a master batch, extrude them and then stretch them to provide the artificial turf fiber 120.

The tufter 118 tufts or inserts the artificial turf fiber 120 into the substrate 110 and its exit provides artificial turf 124. Immediately exiting the tufter 118 the artificial turf fiber 120 may be able to fall off of the substrate 110. After exiting the tufter 118 there may be an applicator 132 for applying a backing coating 130 to the backside 128 of the artificial turf 124. Often times the backing layer coating 130 is a polyurethane or a latex. In one example the latex is colloidal latex; however, the polyurethane may for example be applied as a liquid or a foam. In the example the applicator 132 is shown as being a lick roll including a rotating element used to apply the polyurethane or colloidal latex to the backside 128.

Although it is not shown in this Figure, there may be a knife edge or other support structure before or after the rotating element to lift and control the height of the backside relative to the rotating element 132. The scope of examples may include several means of applying the backing layer coating 130. For example, in another exemplary example the dispensing unit is configured as a knife over roll dispensing unit for applying the polyurethane or colloidal latex onto the backside 128. When a knife over roll technique is used the artificial turf 124 may have a different orientation and may for example be positioned such that the fibers are facing downwards. The liquid may for example be poured or sprayed onto the backside 128 in this case.

After the backing coating 130 has been applied to the backside 128 of the artificial turf 124, it then enters an oven 134 for curing the backing layer coating 130. Upon exiting the oven 134, the artificial turf 124 is in a finished manufactured state.

After the artificial turf 124 exits the oven 134 it passes past the optical sensor 104, which in this case is a camera with a field of view 138. The optical sensor 104 may for example repeatedly acquire images or other optical data within this field of view to measure along a length of the artificial turf 124. As will be described below, the optical sensor 104 may be used as part of an optical inspection system for the artificial turf 124. Also depicted next to the camera 104 is an optical illumination system 144. This may for example be used to controllably illuminate the field of view 138. In some examples, the optical illumination system 144 may be able to illuminate the field of view 138 with different wavelengths of light such as different wavelengths within the optical, infra-red, or even ultraviolet frequency range. The optical system 104 may then for example take different images or optical data depending upon the illumination. In this case there may be multiple images of the save field of view 138 acquired using different illumination. The detection and/or classification of manufacturing defects may then be done using these multiple images instead of just a single image.

After the optical inspection is finished the artificial turf 124 may pass into a finishing system 140. The finishing system 140 may for example cut the artificial turf into manufactured strips of artificial turf 108. The finishing system 140 may also, in some instances, label the strips of artificial turf 108.

The optical sensor 104, the finishing system 140, and the remote server 106 are all shown as being connected to a hardware interface 152 or network interface that is part of the computer 102. The computer 102 comprises a computational system that is in communication with the hardware interface 152 as well as an optional user interface 154. The computational system 150 is intended to represent one or more computational systems or computing cores that are located at one or more locations. The computational system 150 is shown as being additionally connected or in communication with a memory 156. The memory 156 represents various types of memories accessible to the computational system 150.

The memory 156 is shown as storing machine-executable instructions 160. The machine-executable instructions 160 enable the computational system 150 to perform tasks such as controlling other components as well as performing numerical and image processing tasks. In some examples, the computer 102 may also be used for controlling the overall manufacturing system 100. In which case, the hardware interface 152 would be used by the computational system 150 to control these components. The memory 156 is further shown as containing optical data 162 that was acquired using the optical sensor 104. The memory 156 is further shown as containing a computer vision module 164 which for example may apply a classifier to examine if there is a manufacturing defect and/or to classify it. The memory 156 is further shown as containing a turf quality metric 166 that was either output directly by the computer vision module 164 or determined from the output of the computer vision module 164 when the optical data 162 was input into it.

The strip of artificial turf 108 may be labeled in different ways. In one example, the turf quality metric 166 is stored or paired with an identifier 172 of the artificial turf 108 in the memory 168 of the remote server 106. In this case the labeling is provided electronically and may be accessible via the internet or other telecommunication system.

As an alternative to using the remote servicer 106, the artificial turf 108 may be labeled physically. In this example there are two additional ways which are illustrated. 174 represents one or more RFID chips that are attached to or embedded in the artificial turf 108. For example it could be attached or embedded in the substrate 110. Another way of labeling it would be to provide a machine-readable label 176. The machine-readable label 176 may for example provide a pointer to the turf quality metric 166 and the identifier 172 stored in the remote server 106. In other examples, the turf quality metric 170 could be stored directly on the machine-readable label 176.

In various examples, the labeling may either be performed in a way that provides the overall or average value of the strip of artificial turf 108 or it may be done in terms of the length 142 of the strip as it was moved underneath the optical sensor 104. For example, the length can provide the artificial turf metric as a function of position along this length 142. This may for example be useful in installing artificial turf in a way to minimize optical defects or manufacturing defects and thereby reduce the cost of installing artificial turf.

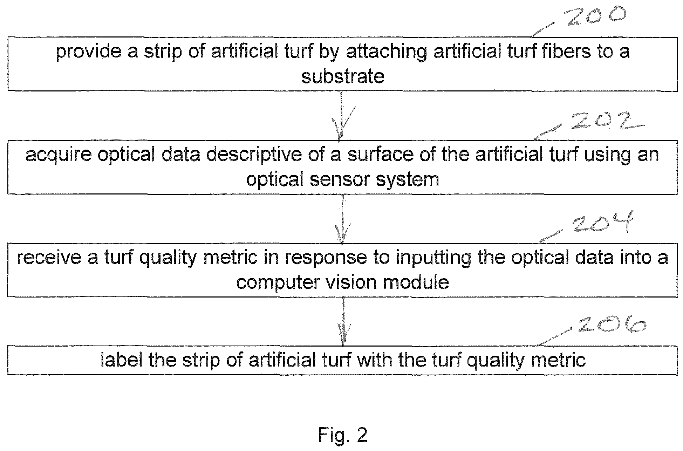

Fig. 2 shows a flowchart which illustrates a method of operating the apparatus illustrated in Fig. 1. In step 200, a strip of artificial turf 124 is provided by attaching the artificial turf fibers 120 to a substrate 110. Next, in step 202, optical data 162 descriptive of a surface or front side 126 of the artificial turf 124 is acquired using the optical sensor 104. In step 204, the turf quality metric 166 is received in response to inputting the optical data 162 into the computer vision module 164. The turf quality metric is descriptive of the presence of at least one of a predetermined list of manufacturing defects for the artificial turf 124. In step 206, the strip of artificial turf 108 is labeled with the turf quality metric 166. As is illustrated in Fig. 1, there are a variety of ways of applying or performing the labeling. It can be stored in a server 106, stored in an RFID chip 174, or even as a machine-readable label 176 affixed to the strip of artificial turf 108.

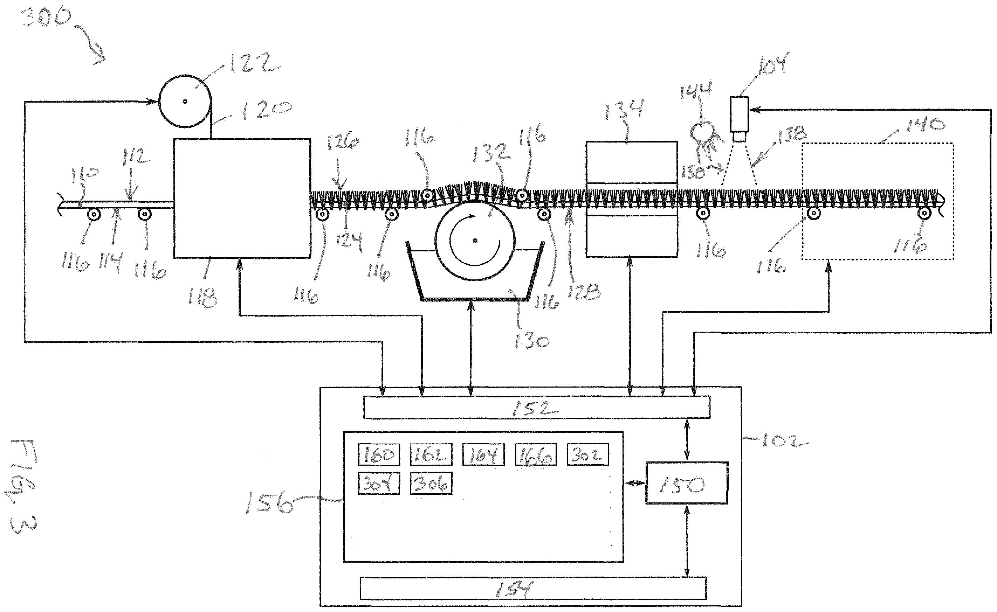

Fig. 3 illustrates a further example of a manufacturing system for artificial turf 300. The system 300 depicted in Fig. 3 is similar to the system 100 depicted in Fig. 1. In this case, the optical inspection system formed by the computer 102 and the optical sensor 104 is used directly for the control of the manufacturing system instead of just for labeling. It should be noted that the features illustrated in Fig. 1 and Fig. 3 may be combined. Figs. 1 and 3 however, illustrate two distinct uses for the combination of the computer 102 and the optical sensor 104.

In the example illustrated in Fig. 3, the hardware interface 152 is additionally shown as being in communication with and controlling the various components of the manufacturing system 300.

The memory 156 is further shown as containing a current set of process parameters 302. The current set of process parameters 302 represent the settings of the various machines and components which are producing the artificial turf 124. The memory 156 is further shown as having a process control system 304. The process control system 304 is shown as being implemented as a software component in the computer 102. However, the process control system may also encompass various sensors, transducers, controllers, actuators or other devices which enable the manufacturing system 300 to be controlled by the computational system 150. A process control system as used herein encompasses a manufacturing control system that may manage and regulate various manufacturing or production processes for producing the artificial turf 124.

The memory 156 is further shown as storing a set of adjusted process parameters 306 that were received from the process control system 304 in response to inputting the turf quality metric 166 and the current set of process parameters 302.

As will be discussed below, the process control system 304 may be implemented in a variety of ways. There may be statistical models which are used, in other cases there may be various artificial intelligence components which can be trained to function as the process control system 304.

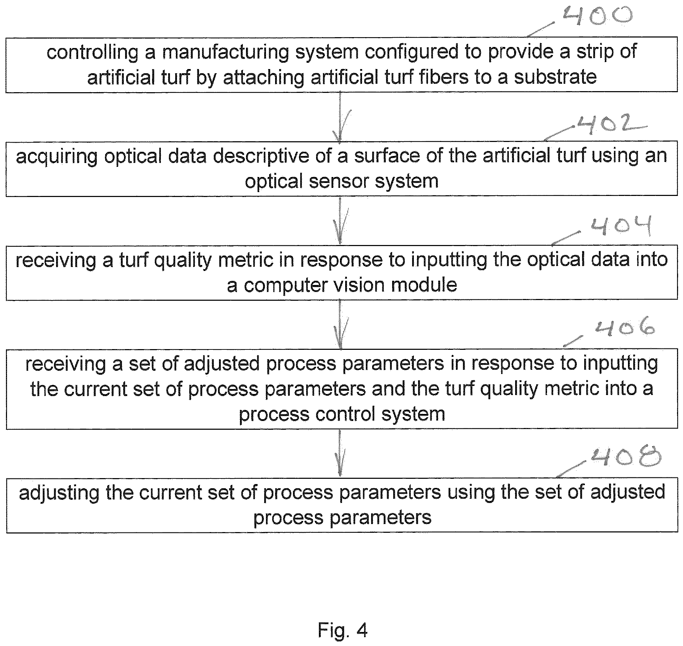

Fig. 4 shows a flowchart which illustrates a method of operating the manufacturing system 300 of Fig. 3. In step 400, the manufacturing system 300 is controlled to provide a strip of artificial turf by attaching artificial turf fibers 120 to a substrate 110. The manufacturing system 300 may be controlled via the current set of process parameters 302. In step 402, the optical data 162 is acquired using the optical sensor 104. In step 404, the turf quality metric 166 is received in response to inputting the optical data 162 into the computer vision module 164. The turf quality metric 166 is descriptive of the presence of at least one of a predetermined list of manufacturing defects. In step 406, the set of adjusted process parameters 306 is received in response to inputting the current set of process parameters 302 and the turf quality metric 166 into the process control system 304. In step 408, the current set of process parameters 302 are adjusted using the set of adjusted process parameters 306. The steps illustrated in Fig. 4 may be performed as a closed control loop. So that after step 408, the method may return to step 400 again.

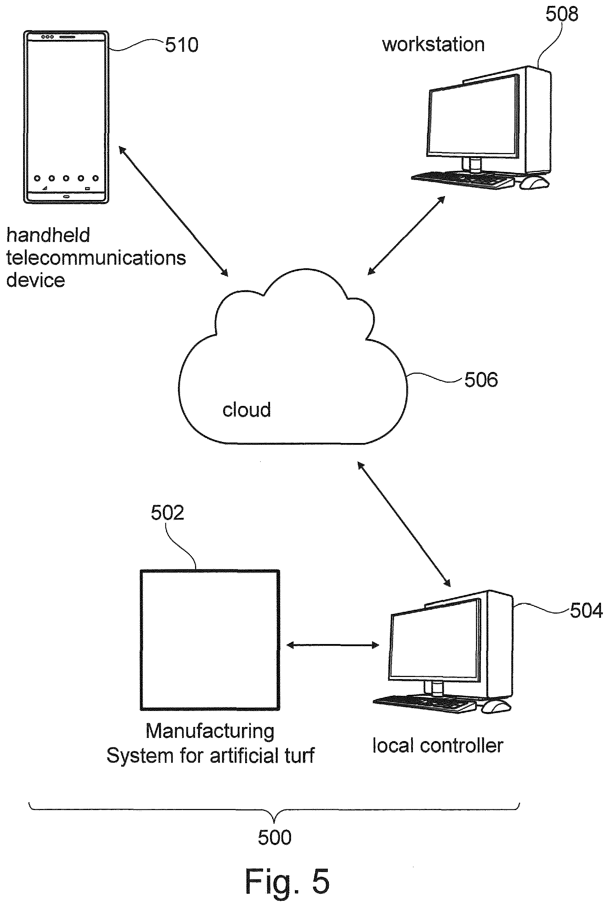

Fig. 5 illustrates a web-based or cloud-based system 500. There is a local manufacturing component that is represented by the manufacturing system 502 and a local controller 504. In some examples, the local controller 504 may be equivalent to the computer 102 illustrated in Figs. 1 or 3. However, the functionality of the computer 102 as illustrated in Figs. 1 and 3 may be distributed to a cloud-based system 506 or to other components 508, 510. The local controller 504 is shown as being in communication with a cloud-based system 506, which may represent an internet connection with other various machines and devices. Additionally, the cloud 506 is in communication with a workstation 508 and a handheld telecommunications device 510. The various control and data analysis functionality as illustrated in Figs. 1 and 3 may be distributed among the components 504, 506, 508, and 510. This is to illustrate that the functionality of the computer 102 illustrated in Figs. 1 and 3, need not be directly at the manufacturing site or all at one location.

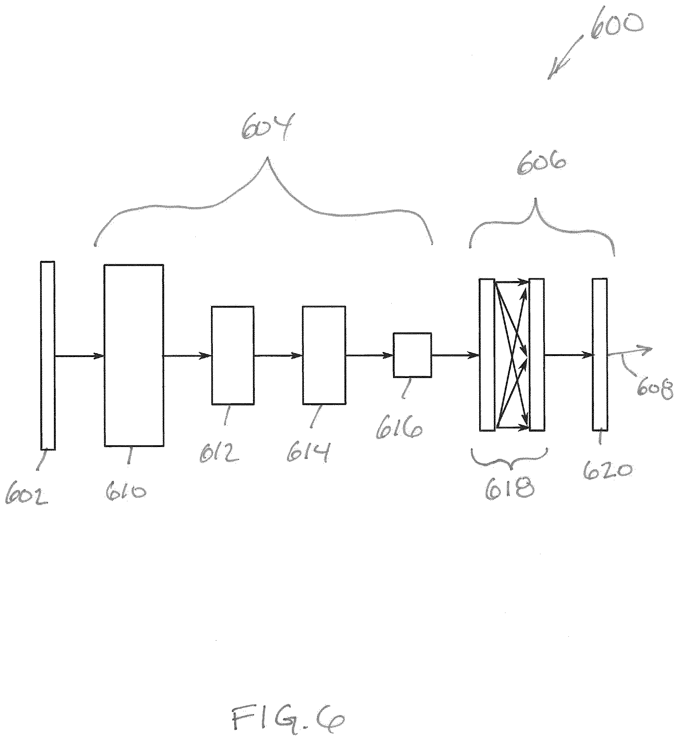

In some instances the computer vision module 164 may be implemented entirely or at least partially using a convolutional neural network 600 or other neural network. In Fig. 6 an exemplary convolutional neural network-based classifier is illustrated. The convolutional neural network 600 is shown as comprising an input layer 602 that is configured to receive the optical data or image. This is then fed to a feature extractor 604 and the output of the feature extractor 604 is fed to a classifier 606, which then outputs the anomaly score vector 608. The anomaly score vector 608 could for example provide a probability or relative probability of a particular artificial turf defect being present. Neural networks typically provide a prediction of a classification or the presence of a defect. As some of the artificial turf defects may be related, typically the anomaly score vector 608 will not have a value of unity for just a single defect if there is a defect present in the artificial turf. The anomaly score vector 608 therefore in itself, may for example be the quality metric 170. Individual values of particular defects could be extracted from this vector 608. In other cases, the turf quality metric 170 could be fed directly into the process control system 304.

The components of the neural network 600 are now explained in more detail. The input layer 602 is configured to receive optical or image data, specifically images of artificial turf 124. Depending upon the use and the particular example, the image may be represented as multi-channels such as RGB or color images or it may be represented as single channel or grayscale matrices. The feature extractor 604 begins with a first convolutional layer 610. This may process the image data input into the input layer 602 to extract low level features such as edges or textures using convolutional filters or kernels. Following this, a first pooling layer 612 reduces the spatial dimensions of the feature maps produced by the convolutional layer 610. This may enhance the computational efficiency whilst retaining the most critical information. A second convolutional layer 614 is fed by the pooling layer 612. This may extract higher level features which may correspond to patterns or regions of interest in the artificial turf image. Subsequently, a second pooling layer 616 further reduces the spatial dimensionality of these feature maps. Together, the convolutional layers 610, 614 and the pooling layers 612, 616 constitute the feature extraction module 604.

The classifier component 606 comprises the multiple fully connected layers 618 and the output layer 620. The fully connected layers 618 perform transformations to uncover or detail relationships between features and assign probabilities to the different types of defects, which may be present in the artificial turf. The final output layer 620 outputs the anomaly score vector 608. As was mentioned above, this may include probabilities that correspond to specific manufacturing defects in the artificial turf.

The architecture detailed in Fig. 6 may vary in a variety of ways. This may be in the number of convolutional layers and pooling layers as well as the various combinations of these. Improved performance may for example be achieved by adding more pooling and/or convolutional layers. However, this may increase the amount of training data necessary.

It should also be noted that the architecture illustrated in Fig. 6 is not the only architecture possible. For example, neural networks such as a U-Net can be configured as a classifier and perform exceptionally well in identifying optical defects. The architecture in Fig. 6 is merely an illustration.

In various examples there may be a single convolutional neural network that is used or there may be multiple convolutional neural networks that are used. For example, in a manufacturing process there may be a single convolutional neural network 600 which continually provides the anomaly score vector 608 to the process control system 304. This may for example be more relatable to the arrangement illustrated in Fig. 3. In Fig. 1, it may not be desirable to always output or label the artificial turf with the anomaly score vector 608. In this case, two neural networks could be used.

For example, a first neural network could be trained to receive a grayscale version of the image of the artificial turf. This first neural network could be trained to only detect if there is any sort of manufacturing defect in the artificial turf. Once this first neural network detects that there is likely an artificial turf defect, then a second neural network which is trained to receive multichannel or RGB images, is then provided as a classifier and the anomaly score vector 608 is provided. In other instances, to avoid having the first grayscale neural network, a thresholding process could be applied to the anomaly score vector 608 so that only if the overall probability or the probability of just one of the possible defects, then the anomaly score vector 608 is recorded.

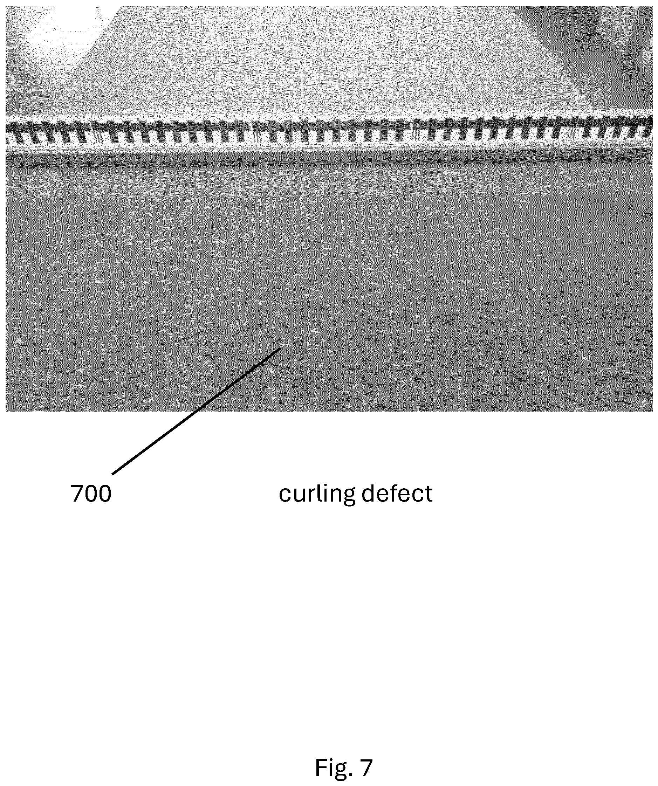

Fig. 7 shows a photograph which illustrates an example of a curling defect in the artificial turf. In the curling defect 700, the artificial turf may have homogeneous distributed internal stress fields within the yarn microstructure. The end of the artificial turf for example may be hook-shaped and this is then defined as the curling effect.

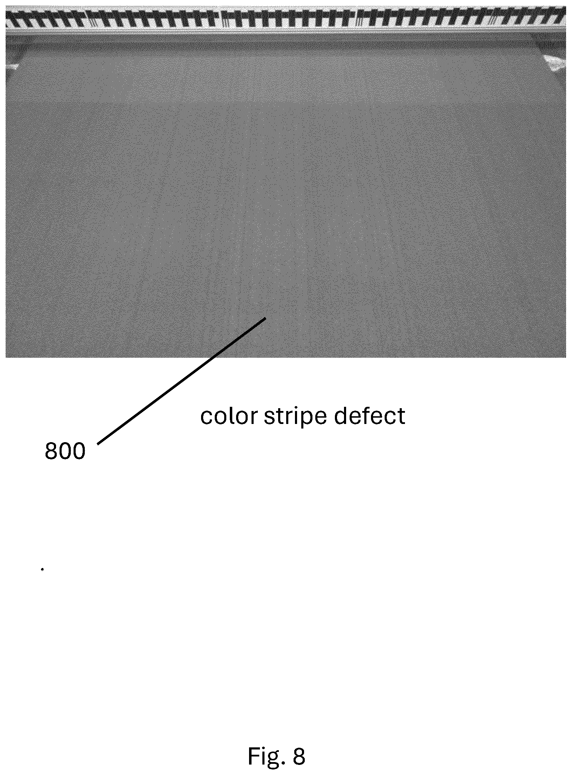

Fig. 8 shows a photograph which illustrates an example of a color stripe defect 800. In the color stripe defect the artificial turf fiber has variations in its color due to inhomogeneous mixing of the masterbatch and/or yarn extrusion.

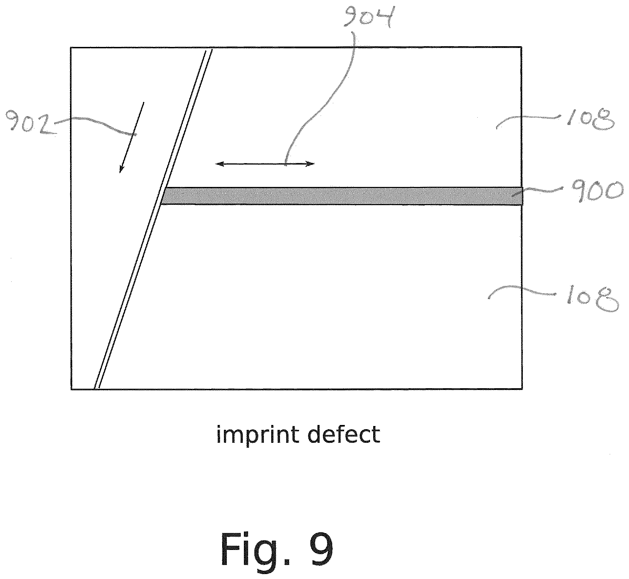

Fig. 9 shows a sketch which illustrates an example of an imprint defect 900. The sketch shows a perspective view of a strip of artificial turf 108. During manufacture the strip of artificial turf 108 traveled through the manufacturing system 100, 300 in direction 902. The direction 904 is perpendicular to direction 902. The imprint defect may be caused when the manufacturing line 100, 300 for the artificial turf stops and the turf is pressed against a transportation supporting role due to its own weight. This is a remaining feature after load experience onto the turf strip and results in a mechanical imprint 900 on the artificial turf.

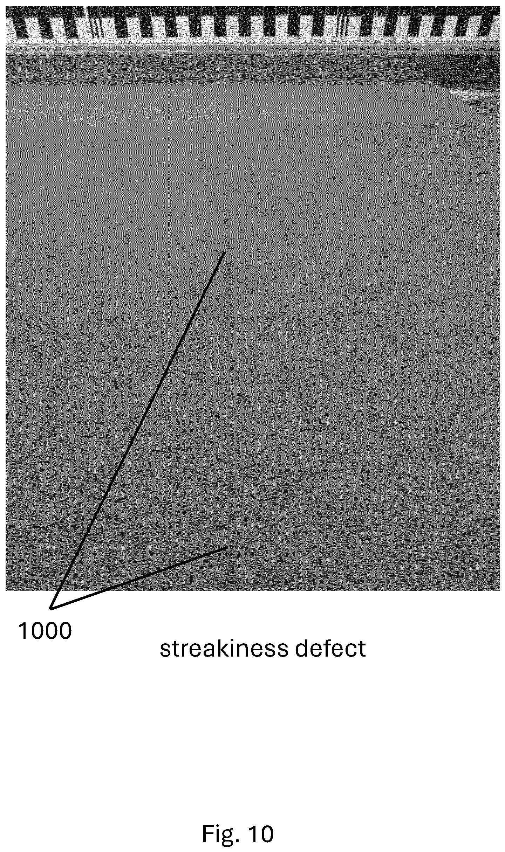

Fig. 10 shows a photograph which illustrates an example of a streakiness defect 1000. In the streakiness defect one or more rows of artificial turf along the length of the strip of artificial turf. The streakiness defect may, for example also be caused by inconsistent curling of the artificial turf fibers. This causes a variation which is noticeable as a difference in color appearance because of the way the light is reflected differently off the artificial turf.

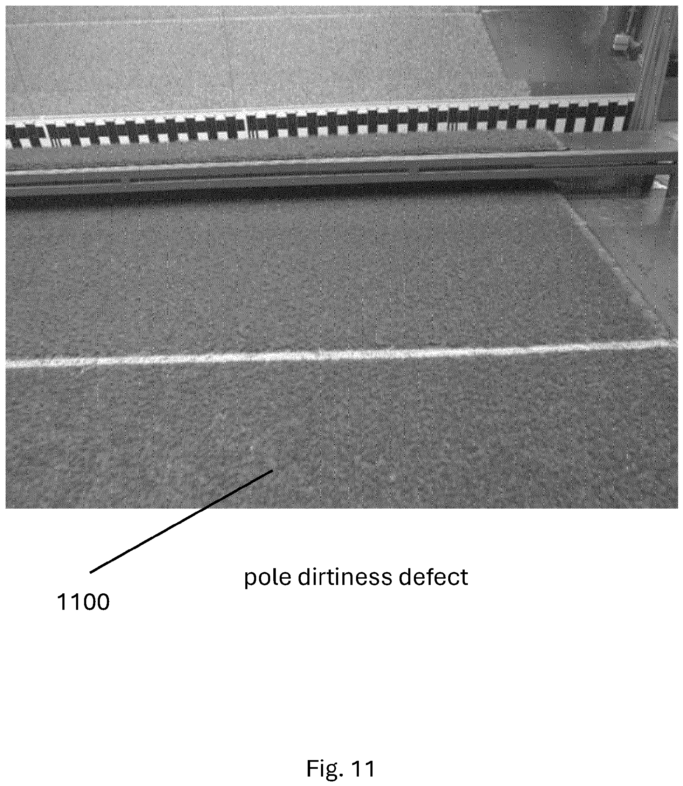

Fig. 11 shows a photograph which illustrates an example of a pole dirtiness defect 1100. In the pole dirtiness defect the backing layer coating 130 goes through the backing and coats some of the artificial turf fiber 124 on the front side 126 of the artificial turf. This may cause the artificial turf to be discolored or appear dirty.

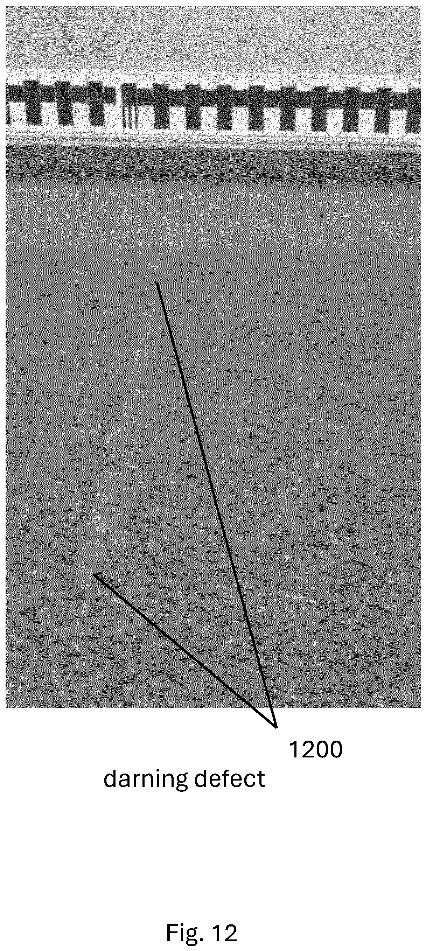

Fig. 12 shows a photograph which illustrates an example of a darning defect 1200 in the artificial turf. The darning defect 1200 is when there is a portion of the artificial turf that is repaired. Sometimes the darning defect is caused by the operator using the wrong or different artificial turf fiber as well as a wrong gauge, stitch rate and yarn color that is used to repair the portion of the artificial turf. As was mentioned above, the appearance of the artificial turf is greatly affected by variations in process parameters used to control the manufacture of the artificial turf fibers such as its extrusion, master batch composition, and details about the quenching of the fibers after extrusion.

While the invention has been illustrated and described in detail in the drawings and foregoing description, such illustration and description are to be considered illustrative or exemplary and not restrictive; the invention is not limited to the disclosed examples.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

Various examples may possibly be described by one or more of the following features in the following numbered clauses:
Clause A1. A method of manufacturing an artificial turf (126, 108), wherein the method comprises:
   - providing a strip of artificial turf (108) by attaching artificial turf fibers (120) to a substrate (110);
   - acquiring optical data (162) descriptive of a surface (126) of the artificial turf using an optical sensor system (104);
   - receiving a turf quality metric (166) in response to inputting the optical data into a computer vision module (164), wherein the turf quality metric is descriptive of the presence of at least one of a predetermined list of manufacturing defects (700, 800, 900, 1000, 1100, 1200); and
   - labeling the strip of artificial turf (108) with the turf quality metric.
Clause A2. The method of clause A1, wherein providing the strip of artificial turf comprises attaching the artificial turf fibers to the substrate using a backing coating (130), wherein the predetermined list of manufacturing defects comprises a pole dirtiness defect (1100), wherein the pole dirtiness defect is a visible presence of the backing coating on artificial turf fibers on a frontside (112) of the substrate.
Clause A3. The method of clause A2, wherein the method of manufacturing further comprises curing the backing coating in an oven (134), wherein measurement of the optical data occurs after curing the backing coating in the oven.
Clause A4. The method of clause A1, A2, or A3, wherein the predetermined list of artificial turf defects comprises a streakiness defect (1000), wherein the streakiness defect is an optical defect causes by an inconsistent coloration, an inconsistent orientation, or inconsistent curling of the artificial turf fibers.
Clause A5. The method of any one of the preceding clauses, wherein the predetermined list of artificial turf defects further comprises any one of the following:
   - an imprint defect (900) caused by a pause in the manufacture of the strip of artificial turf;
   - a curling defect (700) caused by an inconsistent curling of the artificial turf fibers;
   - a darning defect (1200) caused by a mid-manufacturing repair of the strip of artificial turf carpet; and
   - a color stripe defect (800) caused by a color variation in the artificial turf fibers; and
   - combinations thereof.
Clause A6. The method of any one of the preceding clauses, wherein computer vision module comprises a classification module (600), wherein the classification module is configured for outputting an anomaly score vector (608) descriptive of a relative probability of defects in the predetermined list of manufacturing defects.
Clause A7. The method of clause A6, wherein computer vision module further comprises a pre-processing module, wherein the pre-processing module is configured for receiving the optical data and passing preprocessed optical data to the classification module.
Clause A8. The method of clause A7, wherein the pre-processing module is configured for any one of the following: normalizing the optical data, applying an enhance local contrast (CLAHE) filter to the optical data, and combinations thereof.
Clause A9. The method of clause A6, A7, or A8, wherein the classification module is a classifier neural network (600).
Clause A10. The method of clause A9, wherein the classifier neural network is any one of the following: a convolutional neural network based classifier, a ResNet based classifier, an autoencoder based classifier, and a U-net based classifier.
Clause A11. The method of any one of the preceding clauses, wherein the optical sensor system comprises any one of the following: a camera (104), line camera, an infra-red camera, an ultra-violet camera, an RGB camera, and combinations thereof.
Clause A12. The method of any one of the preceding clauses, wherein the optical data comprises any one of the following: color optical data, infrared optical data, ultraviolet data, and combinations thereof.
Clause A13. The method of any one of the preceding clauses, wherein the method further comprises controlling a lighting system (144) to provide multiple wavelengths of illumination during measurement of the optical data.
Clause A14. The method of any one of the preceding clauses, wherein labeling comprises any one of the following: storing the turf quality metric in at least one RFID chip (174) attached to the strip of artificial turf, attaching at least one optically readable label (176) displaying the turf quality metric to the strip of artificial turf, storing the turf quality metric in a memory (156, 168, 506), and combinations thereof.
Clause A15. The method of any one of the preceding clauses, wherein the method further comprises receiving an identifier (172) of the strip of the artificial turf, wherein the turf quality metric is labeled with the identifier of the artificial turf.
Clause A16. The method of clause A15, wherein the identifier of the strip of artificial turf is received optically via a machine vision system.
Clause A17. The method of any one of the preceding clauses, wherein the turf quality metric is descriptive of the entire strip of the artificial turf.
Clause A18. The method of any one of clauses A1 through A16, wherein the method further comprises repeatedly determining the turf quality metric along a length of the strip of artificial turf, and wherein the strip of artificial turf is labeled with the turf quality metric as a function of position along the length of the strip of the artificial turf.
Clause A19. A computer program comprising a computer-readable storage medium (156) having machine executable instructions (160) embodied therewith, said machine executable instructions are configured to cause a computational system to:
   - acquire (202) optical data (162) descriptive of a surface (126) of a strip of artificial turf using an optical sensor system (104);
   - receive (204) a turf quality metric (166) in response to inputting the optical data into a computer vision module (164), wherein the turf quality metric is descriptive of the presence of at least one of a predetermined list of manufacturing defects (700, 800, 900, 1000, 1100, 1200); and
   - label (206) the strip of artificial turf (108) with the turf quality metric.
Clause A20. A manufacturing system for artificial turf, wherein the manufacturing system comprises:
   - an optical sensor system (104) configured for acquiring optical data (162);
   - a memory (156) storing machine executable instructions (160) and a computer vision module (164); and
   - a computational system (150), wherein execution of the machine executable instructions causes the computational system to:
   - control (200) the manufacturing system (100), to provide a strip (108) of artificial turf (126) by attaching artificial turf fibers (120) to a substrate (110);
   - acquiring (202) the optical data descriptive of the surface of the strip of artificial turf using the optical sensor system;
   - receiving (204) a turf quality metric (166) in response to inputting the optical data into the computer vision module, wherein the turf quality metric is descriptive of the presence of at least one of a predetermined list of manufacturing defects (700, 800, 900, 1000, 1100, 1200); and
   - labeling (206) the strip of artificial turf with the turf quality metric.
Clause A21. A strip of artificial turf, comprising a label storing a turf quality metric descriptive of the presence of at least one of a predetermined list of manufacturing defects, wherein the strip of artificial turf is labeled with the turf quality metric as a function of position along the length of the strip of the artificial turf.
Clause A22. The strip of artificial turf of clause A21, wherein the label is any one of the following: at least one RFID chip (174), at least one at least one optically readable label (176) displaying the turf quality metric, and a memory (156, 168, 506) storing the turf quality metric with an identifier of the strip of artificial turf, and combinations thereof.
Clause A23. The strip of artificial turf of clause A21 or A22, wherein the predetermined list of manufacturing defects comprises any one of the following: streakiness defect (1000), imprint defect (900), curling defect (700), darning defect (1200), color stripes defect (800), pole dirtiness defect (1100), and combinations thereof.
Clause B1. A method of manufacturing an artificial turf (126), wherein the method comprises:
   - controlling (400) a manufacturing system (300) configured to provide a strip of artificial turf (126) by attaching artificial turf fibers (120) to a substrate (110), wherein the manufacturing system is controlled using a current set of process parameters (302);
   - acquiring (402) optical data (162) descriptive of a surface (126) of the artificial turf using an optical sensor system (104);
   - receiving (404) a turf quality metric (170) in response to inputting the optical data into a computer vision module (164), wherein the turf quality metric is descriptive of the presence of at least one of a predetermined list of manufacturing defects (700, 800, 900, 1000, 1100, 1200);
   - receiving (406) a set of adjusted process parameters (306) in response to inputting the current set of process parameters and the turf quality metric into a process control system (304); and
   - adjusting (408) the current set of process parameters using the set of adjusted process parameters.
Clause B2. The method of clause B1, wherein the method is performed repeatedly to provide a closed loop control system.
Clause B3. The method of clause B2, wherein the manufacturing system is configured to attach the artificial turf fibers to the substrate using a backing coating (130), wherein the predetermined list of manufacturing defects comprises a pole dirtiness defect (1100), wherein the pole dirtiness defect is a visible presence of the backing coating on artificial turf fibers on a frontside (112) of the substrate.
Clause B4. The method of clause B3, wherein the manufacturing system comprises an oven (134) for curing the backing coating, wherein measurement of the optical data occurs after curing the backing coating in the oven, wherein the process parameters preferably comprises plasma treatment process control parameters.
Clause B5. The method of clause B4, , wherein the predetermined list of artificial turf defects comprises a streakiness defect (1000), wherein the streakiness defect is an optical defect causes by an inconsistent coloration, an inconsistent orientation, and/or an inconsistent curling of the artificial turf fibers, fixed in place during curing of the backing coating in the oven, wherein the process parameters comprise tufter control parameters.
Clause B6. The method of any one of the preceding clauses, wherein the predetermined list of artificial turf defects further comprises any one of the following:
   - a curling defect (700) caused by an inconsistent curling of the artificial turf fibers;
   - a color stripe defect (800) caused by a color variation; and
   wherein the process parameters preferably comprise any one of the following: artificial turf fiber extrusion control parameters and artificial turf quenching parameters.
Clause B7. The method of any one of the preceding clauses, wherein the predetermined list of artificial turf defects further comprises any one of the following:
   - an imprint defect (900) caused by a pause in the manufacture of the strip of artificial turf;
   - a darning defect (1200) caused by a mid-manufacturing repair of the strip of artificial turf carpet; and
   - combinations thereof.
Clause B8. The method of any one of the preceding clauses, wherein computer vision module comprises a classification module (600), wherein the classification module is configured for outputting an anomaly score vector (608) descriptive of a relative probability of defects in the predetermined list of manufacturing defects.
Clause B9. The method of clause B8, wherein computer vision module further comprises a pre-processing module, wherein the pre-processing module is configured for receiving the optical data and passing preprocessed optical data to the classification module.
Clause B10. The method of clause B9, wherein the pre-processing module is configured for any one of the following: normalizing the optical data, applying an enhance local contrast (CLAHE) filter to the optical data, and combinations thereof.
Clause B11. The method of clause B8, B9, or B10, wherein the classification module is a classifier neural network.
Clause B12. The method of clause B11, wherein the classifier neural network is any one of the following: a convolutional neural network based classifier, a ResNet based classifier, an autoencoder based classifier, and a U-net based classifier.
Clause B13. The method of any one of the preceding clauses, wherein the optical sensor system comprises any one of the following: a camera (104), line camera, an infra-red camera, an ultra-violet camera, an RGB camera, and combinations thereof.
Clause B14. The method of any one of the preceding clauses, wherein the optical data comprises any one of the following: color optical data, infrared optical data, ultraviolet data, and combinations thereof.
Clause B15. The method of any one of the preceding clauses, wherein the method further comprises controlling a lighting system to provide multiple wavelengths of illumination during measurement of the optical data.
Clause B16. The method of any one of the preceding clauses, wherein the process control system is implemented using any one of the following: as a feedforward neural network, using reinforcement learning, using gaussian process regression, using a recurrent neural network, using a long short-term memory neural network, using a statistical model, using multiple linear regression, using decision trees, using a random forest, and combinations thereof.
Clause B17. A computer program comprising a computer-readable storage medium (156) having machine executable instructions (160) embodied therewith, said machine executable instructions are configured to cause a computational system to:
   - control (400) a manufacturing system for manufacturing artificial turf, wherein the manufacturing system is configured to provide a strip of artificial turf by attaching artificial turf fibers to a substrate, wherein the manufacturing system is controlled using a current set of process parameters;
   - control an optical system (104) to acquire (402) optical data (162) descriptive of a surface (126) of the artificial turf;
   - receive (404) a turf quality metric (166) in response to inputting the optical data into a computer vision module (164), wherein the turf quality metric is descriptive of the presence of at least one of a predetermined list of manufacturing defects (700, 800, 900, 1000, 1100, 1200); and
   - receive (406) a set of adjusted process parameters (306) in response to inputting the current set of process parameters and the turf quality metric into a process control system (304); and
   - adjust (408) the current set of process parameters using the set of adjusted process parameters.
Clause B18. A manufacturing system for artificial turf (206), wherein the manufacturing system comprises:
   - an optical sensor system (104) configured for acquiring optical data (162);
   - a memory (156) storing machine executable instructions (160), a computer vision module(164), and a process control system (304); and
   - a computational system (156), wherein execution of the machine executable instructions causes the computational system to:
   - control (400) the manufacturing system configured to provide a strip of artificial turf (206) by attaching artificial turf fibers (120) to a substrate (110), wherein the manufacturing system is controlled using a current set of process parameters (302);
   - acquire (402) the optical data descriptive of a surface (126)of the artificial turf using the optical sensor system;
   - receive (404) a turf quality metric (166) in response to inputting the optical data into a computer vision module (164), wherein the turf quality metric is descriptive of the presence of at least one of a predetermined list of manufacturing defects (700, 800, 900, 1000, 1100, 1200); and
   - receive (404) a set of adjusted process parameters (306) in response to inputting the current set of process parameters and the turf quality metric into the process control system; and
      - adjust (406) the current set of process parameters using the set of adjusted process parameters.

### REFERENCE SIGNS LIST

- 100: manufacturing system for artificial turf
- 102: computer
- 104: optical sensor system
- 106: remote or cloud based server
- 108: manufactured strip of artificial turf
- 110: substrate
- 112: frontside of substrate
- 114: backside of substrate
- 116: roller
- 118: tufter (fiber inserter)
- 120: artificial turf fiber
- 122: system for providing artificial turf fiber
- 124: artificial turf
- 126: frontside of artificial turf
- 128: backside of artificial turf
- 130: backing layer coating
- 132: applicator
- 134: oven
- 136: finished artificial turf
- 138: field of view of optical sensor
- 140: finishing system for artificial turf (cut/possibly label)
- 142: direction of length of strip
- 144: illumination system
- 150: computational system
- 152: hardware interface / network interface
- 156: optional user interface
- 158: memory
- 160: machine executable instructions
- 162: optical data
- 164: computer vision module
- 166: turf quality metric
- 168: server memory
- 170: turf quality metric
- 172: identifier of artificial turf
- 174: RFID chip
- 176: machine readable label
- 200: providing a strip of artificial turf by attaching artificial turf fibers to a substrate
- 202: acquiring optical data descriptive of a surface of the artificial turf using an optical sensor system
- 204: receiving a turf quality metric in response to inputting the optical data into a computer vision module
- 206: labeling the strip of artificial turf with the turf quality metric
- 300: manufacturing system for artificial turf
- 302: current set of process parameters
- 304: process control system
- 306: set of adjusted process parameters
- 400: controlling a manufacturing system configured to provide a strip of artificial turf by attaching artificial turf fibers to a substrate
- 402: acquiring optical data descriptive of a surface of the artificial turf using an optical sensor system
- 404: receiving a turf quality metric in response to inputting the optical data into a computer vision module
- 406: receiving a set of adjusted process parameters in response to inputting the current set of process parameters and the turf quality metric into a process control system
- 408: adjusting the current set of process parameters using the set of adjusted process parameters
- 500: web or cloud based system
- 502: manufacturing system
- 504: local controller
- 506: cloud based controls or server
- 508: workstation
- 510: handheld telecommunications device
- 600: convolutional neural network
- 602: input layer
- 604: feature extractor
- 606: classifier
- 608: anomaly score vector
- 610: convolutional layers
- 612: pooling layers
- 614: convolutional layers
- 616: pooling layers
- 618: multiple fully connected layers
- 620: output layer
- 700: curling defect
- 800: color stripe defect
- 900: imprint defect
- 902: direction of travel during manufacture
- 904: perpendicular to 902
- 1000: streakiness defect
- 1100: pole dirtiness defect
- 1200: darning defect

## Claims

1. A method of manufacturing an artificial turf (126, 108), wherein the method comprises:
- providing a strip of artificial turf (108) by attaching artificial turf fibers (120) to a substrate (110);
- acquiring optical data (162) descriptive of a surface (126) of the artificial turf using an optical sensor system (104);
- receiving a turf quality metric (166) in response to inputting the optical data into a computer vision module (164), wherein the turf quality metric is descriptive of the presence of at least one of a predetermined list of manufacturing defects (700, 800, 900, 1000, 1100, 1200); and
- labeling the strip of artificial turf (108) with the turf quality metric.

2. The method of claim 1, wherein providing the strip of artificial turf comprises attaching the artificial turf fibers to the substrate using a backing coating (130), wherein the predetermined list of manufacturing defects comprises a pole dirtiness defect (1100), wherein the pole dirtiness defect is a visible presence of the backing coating on artificial turf fibers on a frontside (112) of the substrate.

3. The method of claim 2, wherein the method of manufacturing further comprises curing the backing coating in an oven (134), wherein measurement of the optical data occurs after curing the backing coating in the oven.

4. The method of any one of the preceding claims, wherein the predetermined list of artificial turf defects comprises a streakiness defect (1000), wherein the streakiness defect is an optical defect causes by an inconsistent coloration, an inconsistent orientation, or inconsistent curling of the artificial turf fibers.

5. The method of any one of the preceding claims, wherein the predetermined list of artificial turf defects further comprises any one of the following:
- an imprint defect (900) caused by a pause in the manufacture of the strip of artificial turf;
- a curling defect (700) caused by an inconsistent curling of the artificial turf fibers;
- a darning defect (1200) caused by a mid-manufacturing repair of the strip of artificial turf carpet; and
- a color stripe defect (800) caused by a color variation in the artificial turf fibers; and
- combinations thereof.

6. The method of any one of the preceding claims, wherein computer vision module comprises a classification module (600), wherein the classification module is configured for outputting an anomaly score vector (608) descriptive of a relative probability of defects in the predetermined list of manufacturing defects.

7. The method of claim 6, wherein computer vision module further comprises a pre-processing module, wherein the pre-processing module is configured for receiving the optical data and passing preprocessed optical data to the classification module.

8. The method of claim 7, wherein the pre-processing module is configured for any one of the following: normalizing the optical data, applying an enhance local contrast (CLAHE) filter to the optical data, and combinations thereof.

9. The method of claim 6, 7, or 8, wherein the classification module is a classifier neural network (600), and wherein the classifier neural network is preferably any one of the following: a convolutional neural network based classifier, a ResNet based classifier, an autoencoder based classifier, and a U-net based classifier.

10. The method of any one of the preceding claims, wherein the method further comprises controlling a lighting system (144) to provide multiple wavelengths of illumination during measurement of the optical data.

11. The method of any one of the preceding claims, wherein labeling comprises any one of the following: storing the turf quality metric in at least one RFID chip (174) attached to the strip of artificial turf, attaching at least one optically readable label (176) displaying the turf quality metric to the strip of artificial turf, storing the turf quality metric in a memory (156, 168, 506), and combinations thereof.

12. The method of any one the preceding claims, wherein the method further comprises repeatedly determining the turf quality metric along a length of the strip of artificial turf, and wherein the strip of artificial turf is labeled with the turf quality metric as a function of position along the length of the strip of the artificial turf.

13. A computer program comprising a computer-readable storage medium (156) having machine executable instructions (160) embodied therewith, said machine executable instructions are configured to cause a computational system to:
- acquire (202) optical data (162) descriptive of a surface (126) of a strip of artificial turf using an optical sensor system (104);
- receive (204) a turf quality metric (166) in response to inputting the optical data into a computer vision module (164), wherein the turf quality metric is descriptive of the presence of at least one of a predetermined list of manufacturing defects (700, 800, 900, 1000, 1100, 1200); and
- label (206) the strip of artificial turf (108) with the turf quality metric.

14. A manufacturing system for artificial turf, wherein the manufacturing system comprises:
- an optical sensor system (104) configured for acquiring optical data (162);
- a memory (156) storing machine executable instructions (160) and a computer vision module (164); and
- a computational system (150), wherein execution of the machine executable instructions causes the computational system to:
- control (200) the manufacturing system (100), to provide a strip (108) of artificial turf (126) by attaching artificial turf fibers (120) to a substrate (110);
- acquiring (202) the optical data descriptive of the surface of the strip of artificial turf using the optical sensor system;
- receiving (204) a turf quality metric (166) in response to inputting the optical data into the computer vision module, wherein the turf quality metric is descriptive of the presence of at least one of a predetermined list of manufacturing defects (700, 800, 900, 1000, 1100, 1200); and
- labeling (206) the strip of artificial turf with the turf quality metric.

15. A strip of artificial turf, comprising a label storing a turf quality metric descriptive of the presence of at least one of a predetermined list of manufacturing defects, wherein the strip of artificial turf is labeled with the turf quality metric as a function of position along the length of the strip of the artificial turf.

## Amended claims

### Amended claims in accordance with Rule 137(2) EPC.

1. A method of manufacturing an artificial turf (126, 108), wherein the method comprises:
- providing a strip of artificial turf (108) by attaching artificial turf fibers (120) to a substrate (110), wherein providing the strip of artificial turf comprises attaching the artificial turf fibers to the substrate using a backing coating (130);
- curing the backing coating in an oven (134)
- acquiring optical data (162) descriptive of a surface (126) of the artificial turf using an optical sensor system (104), wherein measurement of the optical data occurs after curing the backing coating in the oven;
- receiving a turf quality metric (166) in response to inputting the optical data into a computer vision module (164), wherein the turf quality metric is descriptive of the presence of at least one of a predetermined list of manufacturing defects (700, 800, 900, 1000, 1100, 1200), wherein the predetermined list of manufacturing defects comprises a pole dirtiness defect (1100) or a streakiness defect (1000), wherein the pole dirtiness defect is a visible presence of the backing coating on artificial turf fibers on a frontside (112) of the substrate, wherein the streakiness defect is an optical defect caused by an inconsistent coloration, an inconsistent orientation, or inconsistent curling of the artificial turf fibers; and
- labeling the strip of artificial turf (108) with the turf quality metric.

2. The method of claim 1, wherein the predetermined list of artificial turf defects further comprises any one of the following:
- an imprint defect (900) caused by a pause in the manufacture of the strip of artificial turf;
- a curling defect (700) caused by an inconsistent curling of the artificial turf fibers;
- a darning defect (1200) caused by a mid-manufacturing repair of the strip of artificial turf carpet; and
- a color stripe defect (800) caused by a color variation in the artificial turf fibers; and
- combinations thereof.

3. The method of claim 1 or 2, wherein computer vision module comprises a classification module (600), wherein the classification module is configured for outputting an anomaly score vector (608) descriptive of a relative probability of defects in the predetermined list of manufacturing defects.

4. The method of claim 3, wherein computer vision module further comprises a pre-processing module, wherein the pre-processing module is configured for receiving the optical data and passing preprocessed optical data to the classification module.

5. The method of claim 4, wherein the pre-processing module is configured for any one of the following: normalizing the optical data, applying an enhance local contrast (CLAHE) filter to the optical data, and combinations thereof.

6. The method of claim 3, 4, or 5, wherein the classification module is a classifier neural network (600), and wherein the classifier neural network is preferably any one of the following: a convolutional neural network based classifier, a ResNet based classifier, an autoencoder based classifier, and a U-net based classifier.

7. The method of any one of the preceding claims, wherein the method further comprises controlling a lighting system (144) to provide multiple wavelengths of illumination during measurement of the optical data.

8. The method of any one of the preceding claims, wherein labeling comprises any one of the following: storing the turf quality metric in at least one RFID chip (174) attached to the strip of artificial turf, attaching at least one optically readable label (176) displaying the turf quality metric to the strip of artificial turf, storing the turf quality metric in a memory (156, 168, 506), and combinations thereof.

9. The method of any one the preceding claims, wherein the method further comprises repeatedly determining the turf quality metric along a length of the strip of artificial turf, and wherein the strip of artificial turf is labeled with the turf quality metric as a function of position along the length of the strip of the artificial turf.

10. A computer readable storage medium (156) having a computer program comprising machine executable instructions (160) stored thereon, said machine executable instructions are configured to cause a computational system to:
- control (200) a manufacturing system (100), to provide a strip (108) of artificial turf (126) by attaching artificial turf fibers (120) to a substrate (110), wherein providing the strip of artificial turf comprises attaching the artificial turf fibers to the substrate using a backing coating (130);
- control an oven (134) to cure the backing coating;
- acquire (202) optical data (162) descriptive of a surface (126) of a strip of artificial turf using an optical sensor system (104), wherein measurement of the optical data occurs after curing the backing coating in the oven;
- receive (204) a turf quality metric (166) in response to inputting the optical data into a computer vision module (164), wherein the turf quality metric is descriptive of the presence of at least one of a predetermined list of manufacturing defects (700, 800, 900, 1000, 1100, 1200), wherein the predetermined list of manufacturing defects comprises a pole dirtiness defect (1100) or a streakiness defect (1000), wherein the pole dirtiness defect is a visible presence of the backing coating on artificial turf fibers on a frontside (112) of the substrate, wherein the streakiness defect is an optical defect caused by an inconsistent coloration, an inconsistent orientation, or inconsistent curling of the artificial turf fibers; and
- label (206) the strip of artificial turf (108) with the turf quality metric.

11. A manufacturing system for artificial turf, wherein the manufacturing system comprises:
- an optical sensor system (104) configured for acquiring optical data (162);
- a memory (156) storing machine executable instructions (160) and a computer vision module (164); and
- a computational system (150), wherein execution of the machine executable instructions causes the computational system to:
- control (200) the manufacturing system (100), to provide a strip (108) of artificial turf (126) by attaching artificial turf fibers (120) to a substrate (110), wherein providing the strip of artificial turf comprises attaching the artificial turf fibers to the substrate using a backing coating (130);
- control an oven (134) to cure the backing coating;
- acquiring (202) the optical data descriptive of the surface of the strip of artificial turf using the optical sensor system, wherein acquisition of the optical data occurs after curing the backing coating in the oven;
- receiving (204) a turf quality metric (166) in response to inputting the optical data into the computer vision module, wherein the turf quality metric is descriptive of the presence of at least one of a predetermined list of manufacturing defects (700, 800, 900, 1000, 1100, 1200), wherein the predetermined list of manufacturing defects comprises a pole dirtiness defect (1100) or a streakiness defect (1000), wherein the pole dirtiness defect is a visible presence of the backing coating on artificial turf fibers on a frontside (112) of the substrate, wherein the streakiness defect is an optical defect caused by an inconsistent coloration, an inconsistent orientation, or inconsistent curling of the artificial turf fibers; and
- labeling (206) the strip of artificial turf with the turf quality metric.

12. A strip of artificial turf, wherein the artificial turf comprises artificial turf fibers attached to a substrate using a backing coating, wherein the backing coating is oven cured, wherein the artificial turf comprises a label storing a turf quality metric descriptive of the presence of at least one of a predetermined list of manufacturing defects, wherein the predetermined list of manufacturing defects comprises a pole dirtiness defect (1100), wherein the pole dirtiness defect is a visible presence of the backing coating on artificial turf fibers on a frontside (112) of a substrate of the strip of artificial turf, wherein the turf quality metric is descriptive of the pole dirtiness defect after the backing coating is oven cured, wherein the strip of artificial turf is labeled with the turf quality metric as a function of position along the length of the strip of the artificial turf.
